# EUROPEAN PATENT SPECIFICATION

(11) **EP 2 989 955 B1**
(45) Date of publication and mention of the grant of the patent: **13.06.2018**
(21) Application number: 14788558.6
(22) Date of filing: 25.04.2014
(51) Int. Cl.: A47L 9/28, B25J 13/08, B25J 9/16

(54) **ROBOT CLEANER AND CONTROL METHOD THEREFOR**
REINIGUNGSROBOTER UND STEUERUNGSVERFAHREN DAFÜR
APPAREIL DE NETTOYAGE ROBOTISÉ ET SON PROCÉDÉ DE COMMANDE

(30) Priority: 26.04.2013 KR 20130046734
(43) Date of publication of application: 02.03.2016
(73) Proprietor: Everybot Inc., Gyeonggi-do 461-831 (KR)
(72) Inventor: LEE, Ki Yong, Seongnam-si Gyeonggi-do 462-807 (KR); PARK, Hong Seok, Seoul 135-957 (KR); HEO, Joo Pyo, Namyangju-si Gyeonggi-do 472-887 (KR)
(74) Representative: Gulde & Partner
(86) International application number: PCT/KR2014/003693
(87) International publication number: WO 2014/175706

(56) References cited:
- JP-A- H09 206 258
- KR-A- 20060 091 602
- KR-A- 20080 013 308
- KR-B1- 100 619 753
- KR-B1- 100 641 119
- KR-B1- 101 231 932
- US-A1- 2006 054 187
- US-A1- 2007 282 484

## Description

### TECHNICAL FIELD

The present invention relates to a robot cleaner and a control method therefor, and in particular to a robot cleaner which may include an illumination sensor at the top of a robot body, thus performing an intensive cleaning under furniture, for example, a bed and a sofa, where illumination is relatively low.

### BACKGROUND ART

A robot cleaner, in general, performs cleanings while it automatically runs in a predetermined work area like a cleaning area without a user's operation.

Such a robot cleaner performs a cleaning work in such a way that it brushes dusts off and collects using a brush while running along a work route previously set using a built-in program or the optimum work route or a cleaning work in such a way that dusts are sucked with the aid of vacuum suction force and are collected into a dust container.

The thusly constituted robot cleaner is configured to perform cleanings while avoiding any obstacle in such a way to detect the obstacle using a distance detection sensor, for example, an infrared ray sensor disposed on the side.

In addition, if the robot cleaner is intended to clean within a specifically designated area, some external components are provided to limit the movements of the robot cleaner, thus limiting the movement of the robot cleaner, whereupon cleanings can be performed within a limited area.

In the above-described conventional robot cleaner, the movements during an automatic cleaning procedure may be performed in such a way to avoid a predetermined obstacle using a distance detection sensor or to use a predetermined exclusive device. To this end, if it needs to clean under furniture, for example, a bed and a sofa, the height of which is relatively low and which corresponds to a shade and shadow, a plurality of external devices may be necessary. In this case, a user should care of such devices in person, which causes many inconveniences when in use.

US 2007 0 282 484 A discloses a robot cleaner including the features of the preamble of the independent claims of the present invention.

### DISCLOSURE OF THE INVENTION

Accordingly, it is an object of the present invention to provide a robot cleaner which makes it possible to resolve a problem wherein a conventional robot cleaner cannot clean under furniture, for example, a bed and a sofa, based on automatic movements.

To achieve the above objects, there is provided a robot cleaner as claimed in claim 1. Further, the above objects are also solved by a control method of a robot cleaner as claimed in claim 7.

### INDUSTRIAL EFFECTS

In the present invention, an intensive cleaning can be performed under furniture, for example, a bed and a sofa, where illumination is low, and height is low, in such a way to provide a unit for detecting under furniture on the top of a robot body.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating an example of a first embodiment of the present invention;
Figure 2 is a view illustrating an example of key components according to a first embodiment of the present invention;
Figure 3 is a view illustrating an example of a control procedure according to the present invention.
Figure 4 is a view illustrating an example wherein an image sensor is provided on a side surface of a robot body according to another exemplary embodiment of the present invention.

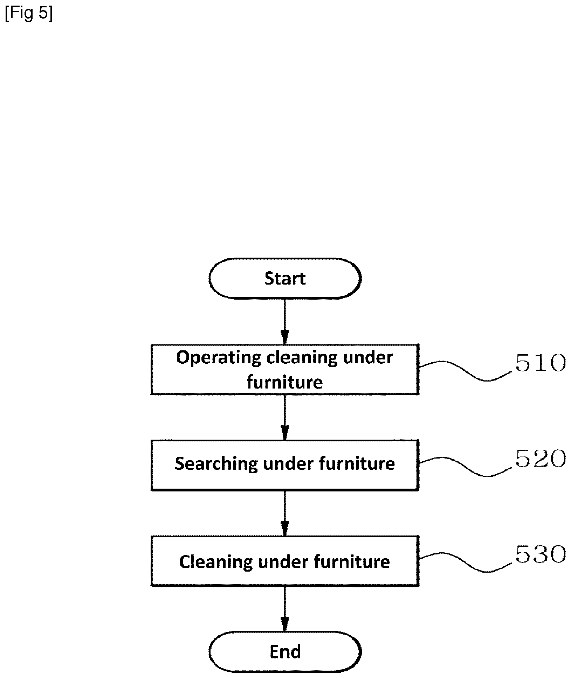

Figure 5 is a view illustrating an example of a control procedure as in Figure 4.

### MODES FOR CARRYING OUT THE INVENTION

The present invention will be described in detail with reference to the accompanying drawings.

The present invention may allow to automatically clean under furniture, for example, a bed and a sofa where illumination is relatively low.

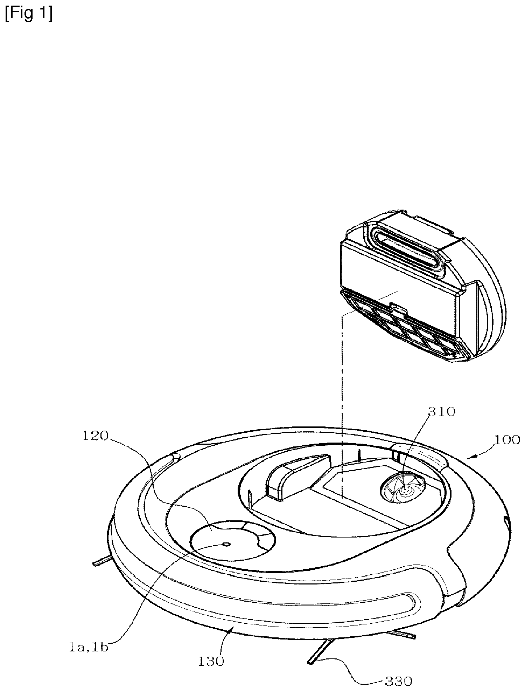

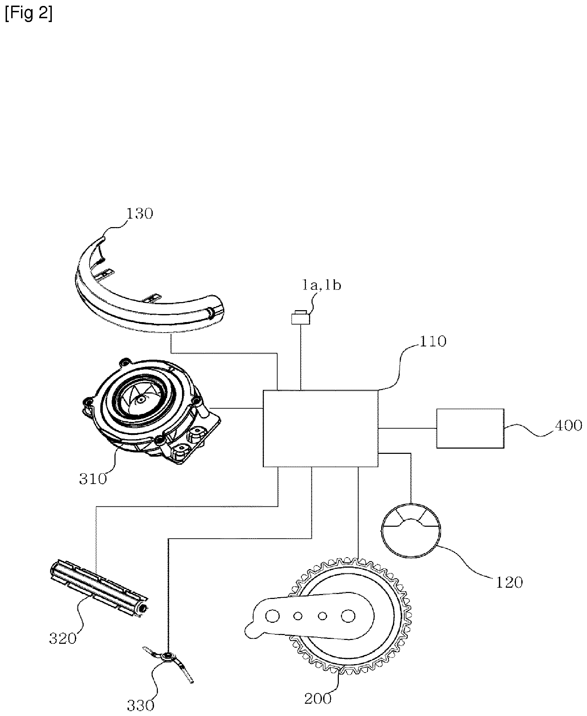

As illustrated in Figures 1 and 2, the present invention provides a robot cleaner which may include, but is not limited to, driving wheels 200 coupled to both sides of a robot body 100 by a suspension device; a main brush 320 coupled to a lower side of the robot body 100; a side brush 330 which is provided on a side surface of the robot body 100; a vacuum pump 310 provided in the inside of the robot body 100 disposed in the inside of the robot body 100; a bumper unit 130 which is provided in front of the robot body 100 and equips with a detection sensor; and a power unit 400 configured to supply electric power for the sake of operations of a robot control unit 110 configured to control the cleanings and operations of the robot body 100 and the operations of the robot. In addition to that, there are further provided a unit for detecting under furniture which is disposed on the top of the robot body100 and is configured to detect whether the running position of the robot body 100 is under furniture and input a detected information into a robot control unit 110, and a robot control unit 110 which is configured to control the driving wheels 200 so that the robot body 100 can run under furniture in such a way that a user controls the operations of an operation unit 120.

Here, the unit for detecting under furniture may be configured by including an illumination sensor 1a which is able to detect under furniture with the aid of surrounding brightness.

As another example of the unit for detecting under furniture, it may include a distance sensor 1b which is able to detect under furniture in such a way to detect a distance to an object of an upper side.

The unit for detecting under furniture may include both an illumination sensor 1a and a distance sensor 1b.

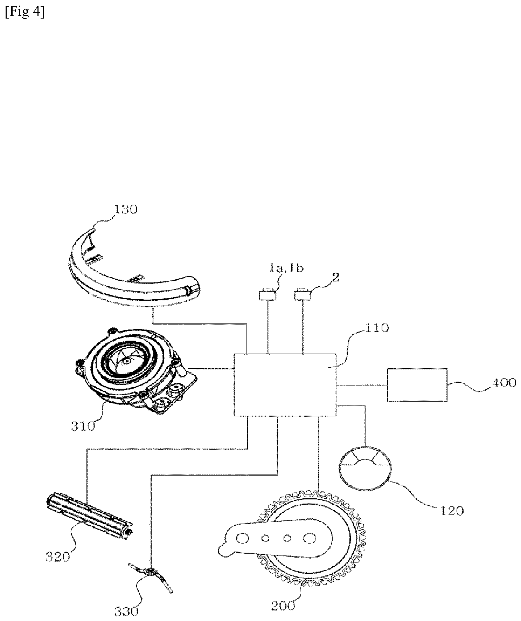

In another embodiment of the present invention, as illustrated in Figure 4, an image sensor 2 is provided on a side surface of the robot body 100 in order to allow the robot control unit 110 to enable the cleaner to run in search of a portion, for example, a portion under furniture, where illumination is relatively lower as compared to surrounding illumination.

The control method of the present invention will be described below.

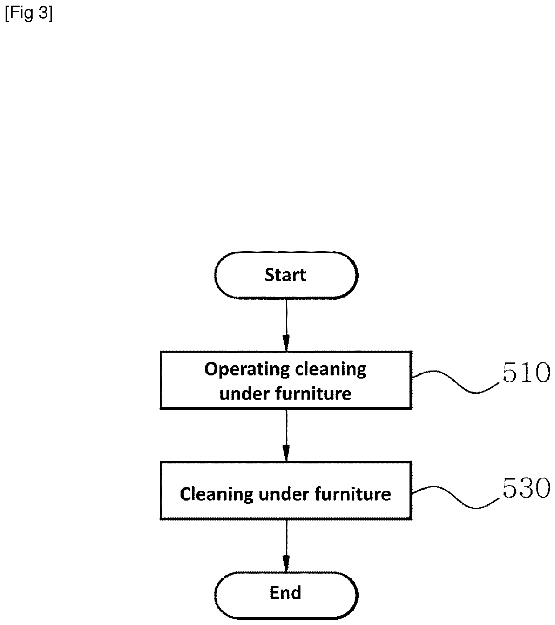

As illustrated in Figure 3, in a robot cleaner which may include, but is not limited to, driving wheels 200 coupled to both sides of a robot body 100 by a suspension device; a main brush 320 coupled to a lower side of the robot body 100; a side brush 330 which is provided on a side surface of the robot body 100; a vacuum pump 310 provided in the inside of the robot body 100 disposed in the inside of the robot body 100; a bumper unit 130 which is provided in front of the robot body 100 and equips with a detection sensor; a power unit 400 configured to supply electric power for the sake of operations of a robot control unit 110 configured to control the cleanings and operations of the robot body 100 and the operations of the robot; and a unit for detecting under furniture which is disposed on the top of the robot body 100, the present invention provides a control method of the above-described robot cleaner, the former of which may include, but is not limited to a step 510 for operating cleaning under furniture, wherein a user operates the operation unit 120 of the robot cleaner so as to clean under furniture, for example, a bed and furniture; and a step 530 for cleaning under furniture so as to detect under furniture with the aid of a unit for detecting under furniture formed of at least one of an illumination sensor 1a, a distance sensor 1b and a combination therefor based on the step 510 for operating cleaning under furniture.

In the above step 530 for cleaning under furniture, if the unit for detecting under furniture is formed of the illumination sensor 1a, the illumination sensor 1a is configured to continuously detect the illumination above the top of the robot body 100, and the robot control unit 110 may receive an illumination signal detected by the illumination sensor 1a. If illumination fast increases since the robot body 100 gets out of under furniture while it is running, the driving wheels 200 rotate for backward movements, whereupon the robot body 100 does not move to get out of under the furniture, thus performing a continuous cleaning under the furniture.

If the unit for detecting under furniture is formed of the distance sensor 1b in case of the step 530 for cleaning under furniture, the distance sensor 1b is configured to continuously detect a distance above the top of the robot body 100, and the robot control unit 110 may receive a distance signal detected by the distance sensor 1b. If a distance above the top of the robot body 100 fast increases since the robot body 100 runs out of under the furniture while it is running, the driving wheels200 rotate for backward movements, whereupon the robot body 100 does not move to get out of under the furniture, thus performing a continuous cleaning under the furniture.

Meanwhile, if the unit for detecting under furniture is formed of both the illumination sensor 1a and the distance sensor 1b in case of the step 530 for cleaning under furniture, the robot control unit 110 compares a distance inputted from the distance sensor 1b when the illumination increases as the robot body approaches an end of the furniture, thus allowing the robot body 100 to move to the end under the furniture and to perform a cleaning under the furniture.

In the embodiment of the present invention, as illustrated in Figure 4, an image sensor 2 is provided on a side surface of the robot body 100. The step 520 for searching under furniture may be performed, wherein the user operates a cleaning under furniture, and the robot control unit 110 searches for a portion where illumination is low like under furniture and moves thereto with the aid of an image data inputted from the image sensor.

## Claims

1. A robot cleaner, comprising:
a robot body (100);
an operation unit (120) which is configured to receive a user's command with respect to the robot cleaner;
means for detecting a portion under furniture which is configured to detect whether a running position of the robot body (100) is the portion under furniture; and
a robot control unit (110) wherein when a command of cleaning the portion under furniture is received from the operation unit, the robot control unit (110) controls driving wheels (200) in order for the robot body (100) to run only the portion under furniture base on a result of the detection of the means for detecting the portion under furniture,
**characterized by** an image sensor (2) which is provided on a side surface of the robot body (100) so that the robot control unit (110) controls for the robot body (100) to run in search of the portion under furniture where illumination is relatively low.

2. The cleaner of claim 1, wherein the means for detecting the portion under furniture is provided on the top of the robot body.

3. The cleaner of claim 2, wherein the means for detecting the portion under furniture includes at least one of an illumination sensor (1a) configured to detect whether a cleaning area is the portion under furniture based on surrounding brightness, and a distance sensor (1b) configured to detect a distance to an object above the same, thus detecting whether the cleaning area is the portion under furniture.

4. The cleaner of claim 3, wherein if the means for detecting under furniture is formed of the illumination sensor (1a), the illumination sensor (1a) detects illumination above the top of the robot body, and if a change in the illumination based on the above detection is over a previously set level, the robot control unit (110) controls for the driving wheels (200) to rotate for backward movements, whereupon the robot control unit (110) controls the robot body (100) not to run out of the portion under furniture.

5. The cleaner of claim 3, wherein if the means for detecting a portion under furniture is formed of the distance sensor (1b), the distance sensor (1b) is configured to detect a distance above the top of the robot body, and if a change in the distance based on the above detection is over a previously set level, the robot control unit (110) controls for the driving wheels (200) to rotate for backward movements, whereupon the robot control unit (110) controls the robot body (100) not to run out of the portion under furniture.

6. The cleaner of claim 3, wherein if the means for detecting a portion under furniture is formed of the illumination sensor (1a) and the distance sensor (1b), the illumination sensor (1a) is configured to detect illumination above the top of the robot body, and the distance sensor (1b) is configured to detect a distance above the top of the robot body, and if the illumination based on the detection increases, the robot control unit (110) controls, with the aid of the distance based on the detection, the driving wheels (200) so that the robot body (100) can move to an end of the portion under furniture.

7. A control method of a robot cleaner, comprising:
receiving a command of cleaning a portion under furniture;
detecting whether the running position of a robot body (100) is under furniture;
controlling for the robot body (100) to run only the portion under furniture using a result of the detection, thus performing cleaning the portion under furniture,
**characterized by** controlling the robot body (100) to move in search of a portion where illumination is as low as that of the portion under furniture with the aid of data from an image sensor (2) provided on a side surface of the robot body..

8. The method of claim 7, wherein the detecting step is performed by means for detecting a portion under furniture, which is provided on the top of the robot body, and the means for detecting a portion under furniture includes at least one of an illumination sensor (1a) configured to detect whether a cleaning area is a portion under furniture based on surrounding brightness, and a distance sensor (1b) configured to detect a distance to an object above the same, thus detecting whether the cleaning area is a portion under furniture.

9. The method of claim 8, wherein in the step for detecting, if the means for detecting a portion under furniture is formed of the illumination sensor (1a), the illumination sensor (1a) is configured to detect illumination above the top of the robot body, and in the step for controlling, if a change in the illumination based on the above detection is over a previously set level, the driving wheels (200) are controlled to rotate for backward movements, whereupon the robot body (100) is controlled not to run out of the portion under furniture.

10. The method of claim 8, wherein in the step for detecting, if the means for detecting a portion under furniture is formed of the distance sensor (1b), the distance sensor (1b) is configured to detect a distance above the top of the robot body, and in the step for controlling, if a change in the distance based on the above detection is over a previously set level, the driving wheels (200) are controlled to rotate for backward movements, whereupon the robot body (100) is controlled not to run out of the portion under furniture.

11. The method of claim 8, wherein in the step for detecting, if the means for detecting a portion under furniture is formed of the illumination sensor (1a) and the distance sensor (1b), the illumination sensor (1a) and the distance sensor (1b) are configured to detect illumination above the top of the robot body (100) and a distance above the top of the robot body, and in the step for controlling, if illumination increases based on the detection, the driving wheels (200) are controlled for the robot body (100) to move to an end of the portion under furniture using a distance based on the detection.

## Patentansprüche

1. Reinigungsroboter, umfassend:
einen Roboterkörper (100);
eine Betriebseinheit (120), die dazu gestaltet ist, einen Befehl eines Benutzers in Bezug auf den Reinigungsroboter zu empfangen;
ein Mittel zum Detektieren eines Abschnitts unter Mobiliar, das dazu gestaltet ist, zu detektieren, ob eine Fahrposition des Roboterkörpers (100) der Abschnitt unter Mobiliar ist; und
eine Robotersteuerungseinheit (110), wobei, wenn von der Betriebseinheit ein Befehl zum Reinigen des Abschnitts unter Mobiliar empfangen wird, die Robotersteuerungseinheit (110) auf der Grundlage eines Ergebnisses der Detektion der Mittel zum Detektieren des Abschnitts unter Mobiliar Antriebsräder (200) so steuert, dass der Roboterkörper (100) nur im Abschnitt unter Mobiliar fährt,
**gekennzeichnet durch** einen Bildsensor (2), der an einer Seitenfläche des Roboterkörpers (100) bereitgestellt ist, sodass die Robotersteuerungseinheit (110) den Roboterkörper (100) dazu steuert, auf der Suche nach dem Abschnitt unter Mobiliar, wo die Beleuchtung relativ gering ist, zu fahren.

2. Reinigungsroboter nach Anspruch 1, wobei das Mittel zum Detektieren des Abschnitts unter Mobiliar oben auf dem Roboterkörper bereitgestellt ist.

3. Reinigungsroboter nach Anspruch 2, wobei das Mittel zum Detektieren des Abschnitts unter Mobiliar zumindest einen Beleuchtungssensor (1a), der dazu gestaltet ist, basierend auf der Umgebungshelligkeit zu detektieren, ob ein Reinigungsbereich der Abschnitt unter Mobiliar ist, und/oder einen Abstandssensor (1b), der dazu gestaltet ist, einen Abstand zu einem Objekt über selbigem zu detektieren, einschließt und so detektiert, ob der Reinigungsbereich der Abschnitt unter Mobiliar ist.

4. Reinigungsroboter nach Anspruch 3, wobei, wenn das Mittel zum Detektieren unter Mobiliar aus dem Beleuchtungssensor (1a) ausgebildet ist, der Beleuchtungssensor (1a) die Beleuchtung über der Oberseite des Roboterkörpers detektiert und, wenn eine Änderung der Beleuchtung basierend auf der vorstehenden Detektion ein zuvor eingestelltes Niveau überschreitet, die Robotersteuerungseinheit (110) die Antriebsräder (200) so steuert, dass sie sich für Rückwärtsbewegungen drehen, worauf die Robotersteuerungseinheit (110) den Roboterkörper (100) so steuert, dass er nicht aus dem Abschnitt unter Mobiliar hinausfährt.

5. Reinigungsroboter nach Anspruch 3, wobei, wenn das Mittel zum Detektieren eines Abschnitts unter Mobiliar aus dem Abstandssensor (1b) ausgebildet ist, der Abstandssensor (1b) dazu gestaltet ist, einen Abstand über der Oberseite des Roboterkörpers zu detektieren und, wenn eine Änderung des Abstands basierend auf der vorstehenden Detektion ein zuvor eingestelltes Niveau überschreitet, die Robotersteuerungseinheit (110) die Antriebsräder (200) dazu steuert, sich für Rückwärtsbewegungen zu drehen, worauf die Robotersteuerungseinheit (110) den Roboterkörper (100) so steuert, dass er nicht aus dem Abschnitt unter Mobiliar hinausfährt.

6. Reinigungsroboter nach Anspruch 3, wobei, wenn das Mittel zum Detektieren eines Abschnitts unter Mobiliar aus dem Beleuchtungssensor (1a) und dem Abstandssensor (1b) ausgebildet ist, der Beleuchtungssensor (1a) dazu gestaltet ist, Beleuchtung über der Oberseite des Roboterkörpers zu detektieren , und der Abstandssensor (1b) dazu gestaltet ist, einen Abstand über der Oberseite des Roboterkörpers zu detektieren, und wobei, wenn die Beleuchtung basierend auf der Detektion steigt, die Robotersteuerungseinheit (110) mit Hilfe des Abstands basierend auf der Detektion die Antriebsräder (200) so steuert, dass sich der Roboterkörper (100) zu einem Ende des Abschnitts unter Mobiliar bewegen kann.

7. Steuerungsverfahren eines Reinigungsroboters, umfassend:
Empfangen eines Befehls zum Reinigen eines Abschnitts unter Mobiliar;
Detektieren, ob sich die Fahrposition eines Roboterkörpers (100) unter Mobiliar ist;
Steuern des Roboterkörpers (100), sodass dieser nur im Abschnitt unter Mobiliar fährt, anhand eines Ergebnisses der Detektion, und so Ausführen einer Reinigung des Abschnitts unter Mobiliar,
**gekennzeichnet durch** das Steuern des Roboterkörpers (100), sodass sich dieser auf der Suche nach einem Abschnitt, in dem die Beleuchtung so gering wie die des Abschnitts unter Mobiliar ist, mit der Hilfe von Daten eines Bildsensors (2), der an einer Seitenfläche des Roboterkörpers bereitgestellt ist, bewegt.

8. Verfahren nach Anspruch 7, wobei der Schritt des Detektierens durch ein Mittel zum Detektieren eines Abschnitts unter Mobiliar ausgeführt wird, das an der Oberseite des Roboterkörpers bereitgestellt ist, und wobei das Mittel zum Detektieren eines Abschnitts unter Mobiliar zumindest einen Beleuchtungssensor (1a), der dazu gestaltet ist, basierend auf der Umgebungshelligkeit zu detektieren, ob ein Reinigungsbereich ein Abschnitt unter Mobiliar ist, und/oder einen Abstandssensor (1b), der dazu gestaltet ist, einen Abstand zu einem Objekt über selbigem zu detektieren, einschließt und so detektiert, ob der Reinigungsbereich ein Abschnitt unter Mobiliar ist.

9. Verfahren nach Anspruch 8, wobei im Schritt zum Detektieren, wenn das Mittel zum Detektieren eines Abschnitts unter Mobiliar aus dem Beleuchtungssensor (1a) ausgebildet ist, der Beleuchtungssensor (1a) dazu gestaltet ist, Beleuchtung über der Oberseite des Roboterkörpers zu detektieren, und im Schritt zum Steuern, wenn eine Änderung der Beleuchtung basierend auf der vorstehenden Detektion ein zuvor eingestelltes Niveau überschreitet, die Antriebsräder (200) so gesteuert werden, dass sie sich für Rückwärtsbewegungen drehen, worauf der Roboterkörper (100) so gesteuert wird, dass er nicht aus dem Abschnitt unter Mobiliar hinausfährt.

10. Verfahren nach Anspruch 8, wobei im Schritt zum Detektieren, wenn das Mittel zum Detektieren eines Abschnitts unter Mobiliar aus dem Abstandssensor (1b) ausgebildet ist, der Abstandssensor (1b) dazu gestaltet ist, einen Abstand über der Oberseite des Roboterkörpers zu detektieren, und im Schritt zum Steuern, wenn eine Änderung des Abstands basierend auf der vorstehenden Detektion über einem zuvor eingestellten Niveau ist, die Antriebsräder (200) so gesteuert werden, dass sie sich für Rückwärtsbewegungen drehen, worauf der Roboterkörper (100) so gesteuert wird, dass er nicht aus dem Abschnitt unter Mobiliar hinausfährt.

11. Verfahren nach Anspruch 8, wobei im Schritt zum Detektieren, wenn das Mittel zum Detektieren eines Abschnitts unter Mobiliar aus dem Beleuchtungssensor (1a) und dem Abstandssensor (1b) ausgebildet ist, der Beleuchtungssensor (1a) und der Abstandssensor (1b) dazu gestaltet sind, Beleuchtung über der Oberseite des Roboterkörpers (100) und einen Abstand über der Oberseite des Roboterkörpers zu detektieren, und im Schritt zum Steuern, wenn Beleuchtung basierend auf der Detektion zunimmt, die Antriebsräder (200) anhand eines Abstands basierend auf der Detektion so gesteuert werden, dass sich der Roboterkörper (100) zu einem Ende des Abschnitts unter Mobiliar bewegt.

## Revendications

1. Aspirateur-robot, comprenant :
un corps de robot (100) ;
une unité fonctionnelle (120) prévue pour recevoir une instruction d'utilisateur relative à l'aspirateur-robot ;
un moyen de détection d'une zone située en dessous d'un meuble, lequel est prévu pour détecter si une position de roulement du corps de robot (100) est une zone située en dessous d'un meuble ; et
une unité de commande de robot (110) où, si une instruction de nettoyage de la zone située en dessous d'un meuble est reçue par l'unité fonctionnelle, l'unité de commande de robot (110) commande des roues motrices (200) pour que le corps de robot (100) ne se déplace que dans la zone située en dessous d'un meuble sur la base d'un résultat de détection du moyen de détection de zone située en dessous d'un meuble,
**caractérisé par** un capteur d'image (2) prévu sur une surface latérale du corps de robot (100), de telle manière que l'unité de commande de robot (110) commande le déplacement du corps de robot (100) à la recherche de la zone située en dessous d'un meuble si l'éclairage est relativement faible.

2. Aspirateur selon la revendication 1, où le moyen de détection de la zone située en dessous d'un meuble est prévu sur le sommet du corps de robot.

3. Aspirateur selon la revendication 2, où le moyen de détection de zone située en dessous d'un meuble comprend un capteur d'éclairage (1a) prévu pour détecter si une surface de nettoyage est la zone située en dessous d'un meuble sur la base de la luminosité ambiante, et/ou un capteur de distance (1b) prévu pour détecter une distance à un objet au-dessus de celle-ci, détectant ainsi si la surface de nettoyage est la zone située en dessous d'un meuble.

4. Aspirateur selon la revendication 3, où, si le moyen de détection en dessous d'un meuble est constitué du capteur d'éclairage (1a), le capteur d'éclairage (1a) détecte un éclairage au-dessus du sommet du corps de robot, et si une variation d'éclairage sur la base de la détection susmentionnée est supérieure à un niveau préalablement défini, l'unité de commande de robot (110) commande la rotation des roues motrices (200) pour des déplacements vers l'arrière, à la suite de quoi l'unité de commande de robot (110) commande un déplacement du corps de robot (100) restreint à l'intérieur de la zone située en dessous d'un meuble.

5. Aspirateur selon la revendication 3, où, si le moyen de détection d'une zone située en dessous d'un meuble est constitué du capteur de distance (1b), le capteur de distance (1b) est prévu pour détecter une distance au-dessus du sommet du corps de robot, et si une variation de distance sur la base de la détection susmentionnée est supérieure à un niveau préalablement défini, l'unité de commande de robot (110) commande la rotation des roues motrices (200) pour des déplacements vers l'arrière, à la suite de quoi l'unité de commande de robot (110) commande un déplacement du corps de robot (100) restreint à l'intérieur de la zone située en dessous d'un meuble.

6. Aspirateur selon la revendication 3, où, si le moyen de détection d'une zone située en dessous d'un meuble est constitué du capteur d'éclairage (1a) et du capteur de distance (1b), le capteur d'éclairage (1a) est prévu pour détecter un éclairage au-dessus du sommet du corps de robot, et le capteur de distance (1b) est prévu pour détecter une distance au-dessus du sommet du corps de robot, et si l'éclairage devient plus intense sur la base de la détection, l'unité de commande de robot (110) commande les roues motrices (200) au moyen de la distance sur la base de la détection de telle manière que le corps de robot (100) puisse se déplacer vers une limite de la zone située en dessous d'un meuble.

7. Procédé de commande d'un aspirateur-robot, comprenant :
la réception d'une instruction de nettoyage d'une zone située en dessous d'un meuble ;
la détection si une position de roulement d'un corps de robot (100) est située en dessous d'un meuble ;
la commande de déplacement du corps de robot (100) restreint à la zone située en dessous d'un meuble au moyen d'un résultat de la détection, un nettoyage étant ainsi exécuté dans la zone située en dessous d'un meuble,
**caractérisé par** la commande de déplacement du corps de robot (100) à la recherche d'une zone où l'éclairage est aussi faible que dans la zone située en dessous d'un meuble, au moyen de données d'un capteur d'image (2) prévu sur une surface latérale du corps de robot.

8. Procédé selon la revendication 7, où l'étape de détection est exécutée par le moyen de détection d'une zone située en dessous d'un meuble prévu au sommet du corps de robot, et où le moyen de détection d'une zone située en dessous d'un meuble comprend un capteur d'éclairage (1a) prévu pour détecter si une surface de nettoyage est une zone située en dessous d'un meuble sur la base de de la luminosité ambiante, et/ou un capteur de distance (1b) prévu pour détecter une distance à un objet au-dessus de celle-ci, détectant ainsi si la surface de nettoyage est une zone située en dessous d'un meuble.

9. Procédé selon la revendication 8, où, lors de l'étape de détection, si le moyen de détection d'une zone située en dessous d'un meuble est constitué du capteur d'éclairage (1a), le capteur d'éclairage (Ia) est prévu pour détecter un éclairage au-dessus du sommet du corps de robot, et où, lors de l'étape de commande, si une variation d'éclairage sur la base de la détection susmentionnée est supérieure à un niveau préalablement défini, une rotation des roues motrices (200) est commandée pour des déplacements vers l'arrière, à la suite de quoi est commandé un déplacement du corps de robot (100) restreint à l'intérieur de la zone située en dessous d'un meuble.

10. Procédé selon la revendication 8, où, lors de l'étape de détection, si le moyen de détection d'une zone située en dessous d'un meuble est constitué du capteur de distance (1b), le capteur de distance (1b) est prévu pour détecter une distance au-dessus du sommet du corps de robot, et, lors de l'étape de commande, si une variation de distance sur la base de la détection susmentionnée est supérieure à un niveau préalablement défini, une rotation des roues motrices (200) est commandée pour des déplacements vers l'arrière, à la suite de quoi est commandé un déplacement du corps de robot (100) restreint à l'intérieur de la zone située en dessous d'un meuble.

11. Procédé selon la revendication 8, où, lors de l'étape de détection, si le moyen de détection d'une zone située en dessous d'un meuble est constitué du capteur d'éclairage (1a) et du capteur de distance (1b), le capteur d'éclairage (1a) et le capteur de distance sont prévus pour détecter un éclairage au-dessus du sommet du corps de robot et une distance au-dessus du sommet du corps de robot, et, lors de l'étape de commande, si l'éclairage devient plus intense sur la base de la détection, les roues motrices (200) sont commandées de telle manière que le corps de robot (100) se déplace vers une limite de la zone située en dessous d'un meuble au moyen d'une distance basée sur la détection.
